# EUROPEAN PATENT SPECIFICATION

(11) **EP 4 181 074 B1**
(45) Date of publication and mention of the grant of the patent: **17.12.2025**
(21) Application number: 21837636.6
(22) Date of filing: 12.07.2021
(51) Int. Cl.: G01B 11/25, G06T 7/33, G06T 17/00, A61C 9/00

(54) **DATA LOCKING SYSTEM AND DATA LOCKING METHOD**
DATENSPERRSYSTEM UND DATENSPERRVERFAHREN
SYSTÈME DE VERROUILLAGE DE DONNÉES ET PROCÉDÉ DE VERROUILLAGE DE DONNÉES

(30) Priority: 10.07.2020 KR 20200085434
(43) Date of publication of application: 17.05.2023
(73) Proprietor: Medit Corp., Seoul 07207 (KR)
(72) Inventor: LEE, Dong Hoon, Seoul 07207 (KR); KANG, Dong Hwa, Seoul 07207 (KR)
(74) Representative: Kim Kang, Jae Hee
(86) International application number: PCT/KR2021/008861
(87) International publication number: WO 2022/010330

(56) References cited:
- KR-A- 20120 081 185
- KR-A- 20140 027 468
- KR-A- 20180 120 907
- KR-A- 20190 084 344
- KR-A- 20200 030 485
- US-A1- 2015 178 908

## Description

### Technical Field

The present disclosure relates to a data locking system and a data locking method.

### Background Art

As one method of obtaining intraoral information of a patient, a three-dimensional intraoral scanner that is inserted into a patient's oral cavity to generate a three-dimensional virtual model is frequently used. In addition, a three-dimensional table scanner that generates a three-dimensional virtual model of a plaster model obtained by taking an alginate impression of a patient's teeth is constantly used. A three-dimensional virtual model obtained through a three-dimensional scanner (including an intraoral scanner and a table scanner) includes a patient's maxillary scan data, mandibular scan data, and occlusion scan data. For a tooth requiring treatment, a dental restoration, such as a crown, may be manufactured through modeling using a computer aided design (CAD) program.

In general, the three-dimensional scanner may obtain a two-dimensional image of an object through a light projector for emitting specific light to an object to be scanned (the inside of a patient's oral cavity including teeth and gingiva) or a plaster model within the scanner and a camera unit for receiving light emitted from the light projector and reflected from the surface of the object, and may finally generate and display a three-dimensional intraoral model. However, when data obtained through the light received in the process of generating the three-dimensional intraoral model is accumulated indefinitely, many unnecessary system resources may be used in the process of finally aligning and merging data. The inefficient use of system resources may hinder rapid completion of a three-dimensional intraoral model. On the other hand, there is a problem in that the reliability of the three-dimensional intraoral model is not guaranteed when erroneous data such as soft tissue is obtained.

KR20190084344 discloses a processing device that receives an intraoral image of a first intraoral site and determines an identity of the first intraoral site. The processing device then locks the intraoral image and selects a portion of the intraoral image depicting a portion of the first intraoral site based at least in part on the identity of the first intraoral site. The processing device may then generate a model comprising the first intraoral site based at least in part on the locked intraoral image, wherein the portion of the locked intraoral image is used for a first region of the model, and wherein data from one or more additional intraoral images that also depict the portion of the first intraoral site is not used for the first region of the model.

US2015178908 discloses a method for capturing the three-dimensional surface geometry of objects, that includes: 1) Loading an available TSDF from a storage medium; 2) Capturing a new depth image; 3) Loading available poses to the loaded TSDF; 4) Applying the loaded poses to the loaded TSDF; a) Verifying for each point of the depth image which has been transformed, whether the point has a first defined attribute due to the applied pose and, if applicable, labeling the point; b) Counting all labeled points in the depth image for each pose; 5) Selecting the pose with the most labeled points; 6) Generating an artificial depth image; 7) Applying an ICP method to the new and artificial depth images to gain a new pose; 8) Verifying whether the ICP method leads to a successful registration; 9) If Step 8 is successful, updating the existing TSDF; 10) If unsuccessful, repeating the steps beginning with Step 4).

### Disclosure

### Technical Problem

The present disclosure aims to provide a data locking system for performing data locking (update restriction) on data obtained through a scanner on a unit cell basis according to a degree of reliability of the obtained data.

In addition, the present disclosure aims to provide a data locking method of performing data locking (update restriction) so that additional data accumulation is not performed through the determination of a controller with respect to a point where sufficient reliable data is accumulated through a series of processes.

The technical objectives of the present disclosure are not limited to those described above, and other technical objectives that are not described herein will be clearly understood by those of ordinary skill in the art from the following descriptions.

### Technical Solution

To achieve the objectives described above, a data locking system is set out in claim 1. Additional features are set out in claims 2 to 12.

On the other hand, a data locking method according to the present disclosure is provided as set out in claim 13.

### Advantageous Effects

By using a data locking system and a data locking method according to the present disclosure, a unit cell that has reached a critical condition may restrict data update or accumulation even when additional data is input through a scanner, thereby preventing use of unnecessary resources. This provides an advantage of being able to obtain a highly reliable intraoral model.

In addition, when the data locking system and the data locking method according to the present disclosure are used, characteristic information may be selectively updated in the unit cell. This provides an advantage of easily filtering noise data and minimizing user inconvenience.

In addition, whether data density reaches a critical value may be determined on a unit cell basis and data locking may be performed. This may provide an advantage of being able to precisely scan an entire object to be scanned.

### Description of Drawings

FIG. 1 is a schematic configuration diagram of a data locking system according to the present disclosure.
FIG. 2 is a reference diagram for explaining degrees of accumulation of data in a plurality of scan ranges, in order to describe the data locking system according to the present disclosure.
FIGS. 3 to 7 are reference diagrams in which a real-time three-dimensional surface is generated and displayed according to scanning performed by a scanner on a user interface displayed on a display, in order to describe the data locking system according to the present disclosure.
FIGS. 8 to 10 are diagrams for explaining a process of updating characteristic information when data is input to a corresponding unit cell, in order to describe the data locking system according to the present disclosure.
FIG. 11 is a flowchart of a data locking method according to the present disclosure.

### Best Mode

Hereinafter, some embodiments of the present disclosure will be described in detail with reference to example drawings. In assigning reference numerals to elements of the drawings, it should be noted that the same elements are denoted by the same reference numerals as much as possible even though the same elements are illustrated in different drawings. In addition, in describing the embodiments of the present disclosure, when the detailed descriptions of the relevant known functions or configurations are determined to unnecessarily obscure the gist of the present disclosure, detailed descriptions thereof are omitted.

Terms, such as "first," "second," "A," "B," "(a)," or "(b)" may be used herein to describe the elements of the present disclosure. These terms are only for distinguishing one element from another, and the essence, order, or sequence of the elements is not limited by the terms. In addition, unless defined otherwise, all terms including technical or scientific terms as used herein have the same meaning as commonly understood by those of ordinary skill in the art. It will be understood that terms, such as those defined in commonly used dictionaries, should be interpreted as having a meaning that is consistent with their meaning in the context of the relevant art and will not be interpreted in an idealized or overly formal sense unless expressly so defined herein.

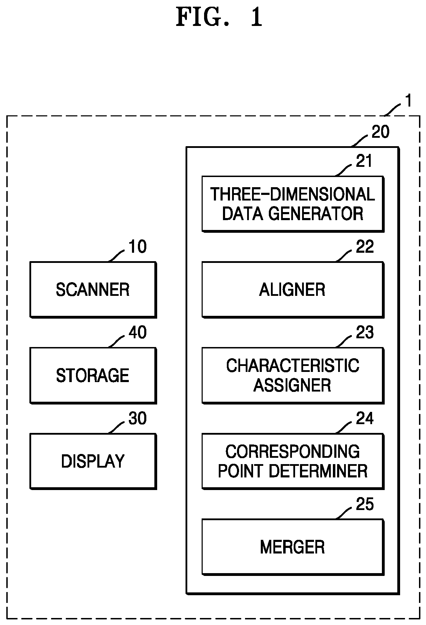

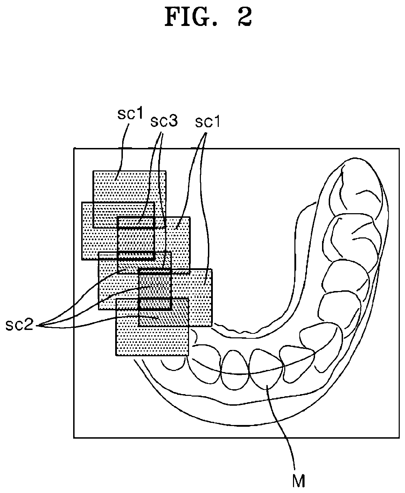

FIG. 1 is a schematic configuration diagram of a data locking system according to the present disclosure, and FIG. 2 is a reference diagram for explaining degrees of accumulation of data in a plurality of scan ranges, in order to describe the data locking system according to the present disclosure.

Referring to FIG. 1, the data locking system according to the present disclosure may include a scanner 10 that emits light toward an object M to be scanned and receives light reflected from the object M, and a controller 20 that processes a plurality of pieces of data obtained from the light received by the scanner 10 so as to be displayed on a user interface in a form of a real-time three-dimensional surface M', and determines whether to store data, based on the characteristic of the real-time three-dimensional surface M'.

First, as briefly described in the background art, the scanner 10 may be an intraoral scanner that is gripped by a practitioner's hand to scan a patient's oral cavity or a plaster model obtained through impression taking, or may be a table scanner that scans a plaster model placed on a tray. The scanner 10 includes at least one camera and analyzes light received through this camera to generate a two-dimensional image. The two-dimensional image may be generated by an imaging sensor that is electrically and communicatively connected to the camera. For example, a complementary metal-oxide semiconductor (CMOS) sensor may correspond to the imaging sensor.

On the other hand, the scanner 10 may include a light projector in order to obtain stereoscopic information for converting a two-dimensional image into a real-time three-dimensional surface. The light projector emits light toward an object and allows light reflected from the object to be received by a camera formed in the scanner 10. The light emitted from the light projector toward the object may be structured light having a certain pattern. The pattern of the structured light may be fixed or may be variable so that a certain rule is circulated.

Referring to FIG. 2, scanning that is performed from one end to the other end of an object is illustrated. When two-dimensional image data is obtained from the scanner 10, a three-dimensional data generator 21 of the controller 20 may convert this data into a real-time three-dimensional surface including at least one unit cell. The real-time three-dimensional surface may be three-dimensionally represented on the user interface, and unit cells constituting the real-time three-dimensional surface may represent the surface of the object. More specifically, the unit cells constituting the real-time three-dimensional surface may be voxels having a volume like a three-dimensional pixel, and the unit cell may include at least one of various pieces of characteristic information. At this time, the characteristic information may include data density, curvature, object color, reliability color, update restriction information, and the like.

The scanning process of the scanner 10 has been described above as performing scanning from one end to the other end of the object, but the scanning process does not necessarily have to be performed from one end to the other end, and the scanning process may also be performed from the center toward both sides. In the case of the table scanner, a real-time three-dimensional surface may be generated while rotating or tilting the object M within a range where a scan overlap area is formed.

On the other hand, when the object M is scanned in FIG. 2, more data may be accumulated when the scanned areas overlap each other. For example, in a case where scanning is performed on six areas as illustrated, when data of the object M is obtained by one scan area, it corresponds to a first scan area sc1, and when data of the object M is obtained by two scan areas, it corresponds to a second scan area sc2. In addition, when data is obtained by three scan areas, it may correspond to a third scan area sc3. A degree of accumulation of data (in the present specification, this is referred to as data density) increases in the order of the first scan area sc1, the second scan area sc2, and the third scan area sc3.

More specifically, the data density among the pieces of characteristic information described above refers to a degree of accumulation of data corresponding to a corresponding unit cell. As the data density increases, more corresponding data according to the scanning process is accumulated, thus increasing reliability. For other characteristic information, the curvature and the object color correspond to surface information of the object, and have pieces of information that may realistically represent the real-time three-dimensional surface on the user interface. The reliability color is an index representing the accuracy (or reliability) of data included in the unit cell, and information about the reliability color may be assigned to correspond to the magnitude of the data density. At this time, the information about the reliability color may be assigned in at least two different colors so as to correspond to the magnitude of the data density. In this case, assigning the characteristic information is performed by a characteristic assigner 23 included in the controller 20. The characteristic assigner 23 may assign the characteristic information after a corresponding point determiner 24 identifies the characteristic information of the unit cell. The determination of the characteristic information by the corresponding point determiner 24 will be described below.

For example, when the data density is 0, there is no reliability color that is assigned to the corresponding unit cell and displayed on the user interface. When the data density is 0, the reliability is also 0 because no data is input to the corresponding location. When the data density is greater than 0 and less than a first reference point, the reliability color that is assigned to the corresponding unit cell and displayed on the user interface may be a first reliability color or a first pattern. In addition, when the data density is greater than the first reference point and less than a second reference point, the reliability color that is assigned to the corresponding unit cell and displayed on the user interface may be a second reliability color or a second pattern. In addition, when the data density is greater than the second reference point, the reliability color that is assigned to the corresponding unit cell and displayed on the user interface may be a third reliability color or a third pattern.

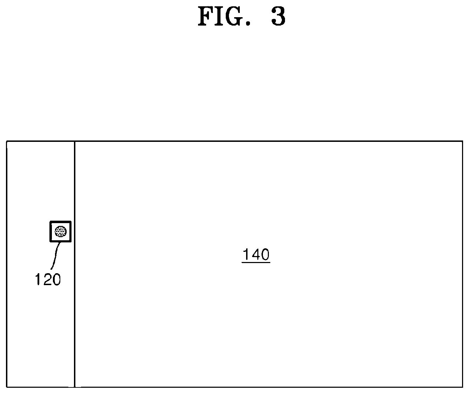

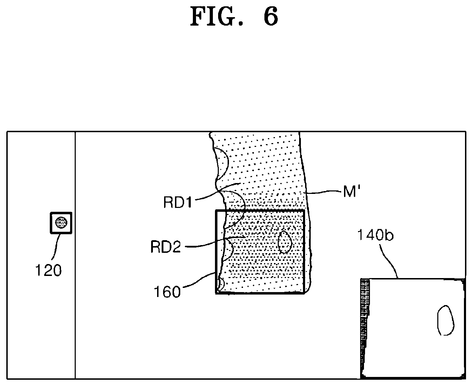

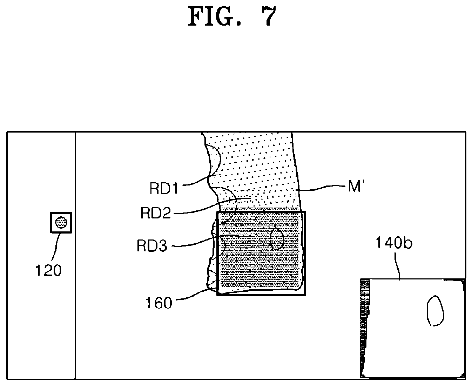

FIGS. 3 to 7 are reference diagrams in which a real-time three-dimensional surface is generated and displayed according to scanning performed by the scanner on the user interface displayed on the display, in order to describe the data locking system according to the present disclosure.

Referring to FIG. 3, a screen before the scanning process by the scanner 10 is initially performed is illustrated. A reliability display button 120 may be formed on one side of the screen, and a user interface 140 is formed on the other side of the screen. When the reliability display button 120 is clicked, various states of the real-time three-dimensional surface M' displayed on the user interface may be switched and displayed. The real-time three-dimensional surface M' may or may not display the reliability color according to the clicking of the reliability display button 120. Alternatively, at least one of various pieces of characteristic information of the unit cells constituting the real-time three-dimensional surface M' may be displayed according to the clicking of the reliability display button 120. As illustrated in FIG. 3, because it is before the scanning process is performed, there are no generated real-time three-dimensional surfaces and unit cells, and characteristic information that may be displayed is also in a non-assigned state.

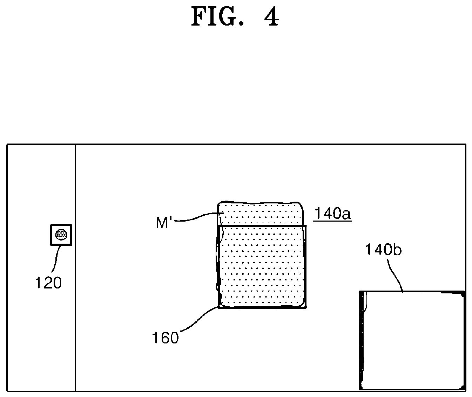

Referring to FIG. 4, two-dimensional image data input from the scanner 10 is converted into the real-time three-dimensional surface M' by the three-dimensional data generator 21 and is displayed on the user interface 140. In this case, one or more real-time three-dimensional surfaces M' that are generated by the three-dimensional data generator 21 are aligned to correspond to overlap points. The alignment between the real-time three-dimensional surfaces may be performed by using the most suitable method among various alignment methods. Preferably, the alignment may be performed by using an iterative closest point (ICP) method. The area currently being scanned is displayed as the real-time three-dimensional surface in a scan area 160 corresponding to a portion of a model display area 140a, and two-dimensional image data input through the scanner 10 is displayed on a real-time display area 140b.

When alignment is performed by an aligner 22, characteristic information is assigned to the unit cell of the aligned real-time three-dimensional surface M'. At this time, the characteristic information assigned to the unit cell may include data density, reliability color, update restriction information, and the like, as described above. For example, the update restriction information may be information restricting the input of additional data to a corresponding unit cell when data density corresponding to a certain critical value is accumulated. That is, the update restriction information may be information dependent on the data density. When data density of an arbitrary unit cell corresponds to a certain critical value, the update restriction information may be ON (update restriction). However, the present disclosure is not necessarily limited thereto, and the update restriction information may be represented by using two contrasting marks. For example, the update restriction information may be represented by 0 (update permission) and 1 (update restriction), or may be represented by OFF (update permission) and ON (update restriction).

When the same data is input, the data density increases, and information about the reliability color may be assigned together to correspond to the magnitude of the data density.

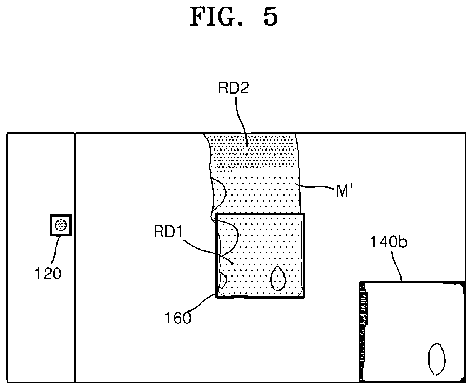

Referring to FIGS. 5 to 7, a first reliability color RD1, a second reliability color RD2, or a third reliability color RD3 may be displayed according to a degree of accumulation of data. For example, the first reliability color may be red, the second reliability color may be yellow, and the third reliability color may be green. Upon scanning an object M, a practitioner may easily visually identify a part where reliable data is obtained and a part where reliable data is not obtained, through the reliability color of the real-time three-dimensional surface M' displayed on the user interface 140. An intraoral model with high reliability as a whole may be obtained by performing additional scanning on parts indicated by the first reliability color RD1 and the second reliability color RD2.

On the other hand, the data locking system 1 according to the present disclosure may further include a corresponding point determiner 24 that aligns the location of the real-time three-dimensional surface M' and determines whether characteristic information is less than a critical value with respect to the unit cell of the real-time three-dimensional surface M', so as to obtain an intraoral model with high reliability through accumulation of data that is input according to the scanning process.

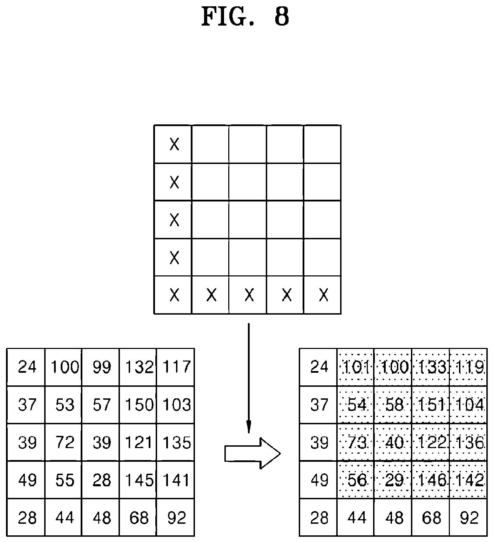

FIGS. 8 to 10 are diagrams for explaining a process of updating characteristic information when data is input to the corresponding unit cell, in order to describe the data locking system 1 according to the present disclosure. At this time, the characteristic information is exemplarily described in detail by using the data density (or reliability color), and the critical value of the data density is set to 500.

Referring to FIG. 8, a plurality of unit cells formed in an arbitrary scan area are exemplarily illustrated in a form of a 5×5 matrix in order to explain the present disclosure. Characteristic information of data (real-time three-dimensional surface converted from two-dimensional image data and including at least one unit cell) input according to the scanning of the scanner 10 may be assigned and updated to each unit cell. As illustrated in FIG. 8, the data density is accumulated in each unit cell, it is assumed that the data input according to the scanning of the scanner 10 is a part corresponding to a 4×4 matrix of an upper right corner, and unit cells indicated by 'X' mean that data corresponding to the existing scan area is not input. In this case, the corresponding point determiner identifies the characteristic information of the unit cell corresponding to the 4x4 matrix of the overlapped and aligned upper right corner of the real-time three-dimensional surface M'. In FIG. 8, because there is no unit cell that has reached the critical value of data density in the unit cells of the part where newly input real-time three-dimensional surface overlaps, the characteristic assigner 23 updates characteristic information included in the corresponding unit cell. Characteristic information of shaded unit cells in FIG. 8 is updated so that the data density increased according to newly input data.

The process of updating the characteristic information will be described in more detail. For example, a plurality of unit cells formed in an arbitrary scan area are illustrated in a form of a 5×5 matrix. When data is input to a part corresponding to a 4×4 matrix of an upper right corner, the characteristic assigner 23 may compare characteristic information of each unit cell with characteristic information of data input to a corresponding location. The characteristic assigner 23 may selectively update the characteristic information by comparing the characteristic information of the existing unit cell with the characteristic information of newly input data. For example, when object curvature and/or object color information of the newly input data is the same as object curvature and/or object color information of an arbitrary unit cell, the characteristic assigner 23 may add the data density of the corresponding unit cell by a certain value (e.g., 1). In addition, when object curvature and/or object color information of the newly input data is different from object curvature and/or object color information of an arbitrary unit cell, the characteristic assigner 23 may not update characteristic information in the corresponding unit cell and may not add the data density.

For example, the process by which the characteristic assigner 23 selectively updates the characteristic information in the unit cell may be performed when each unit cell has a data density greater than a certain sub-critical value. That is, when scanning is performed by the scanner 10 and the critical value for update restriction of the unit cell is 500, the sub-critical value may be set to 100. That is, when the data density is less than 100, data newly obtained by scanning and characteristic information included in the data may all be stored in the corresponding unit cell. On the other hand, when the data density is 100 or more, data newly obtained by scanning may be selectively updated based on dominant characteristic information of the corresponding unit cell. For example, in a case where the characteristic information of an arbitrary unit cell is greater than or equal to the sub-critical value and less than or equal to the (main) critical value, the characteristic assigner 23 may add the certain value of the data density only when the characteristic information of the newly obtained data is the same as the dominant characteristic information of the existing unit cell.

The 'dominant characteristic information' will be described in more detail. To describe this, the color of the object will be taken as an example. When the arbitrary unit cell has a data density less than the sub-critical value and the obtained characteristic information is an object color of 50 reds, 30 pinks, and 19 yellows, the dominant characteristic information of the corresponding unit cell may be red. Thereafter, when the scanning process is performed, in a case where the characteristic information of the newly obtained data is not red, the newly obtained data may be determined as noise, the characteristic information may not be updated in the corresponding unit cell, and the data density may not be added.

As described above, when the 'dominant characteristic information' is determined from the characteristic information obtained when the data density is less than the sub-critical value, it is possible to effectively prevent noise data from being accumulated in the unit cell. Therefore, the data locking system according to the present disclosure may have highly reliable characteristic information for all intraoral models, and may have an advantage of being able to minimize user inconvenience, such as arbitrarily deleting an erroneously obtained part and re-scanning.

However, the above description is only illustrative, and the numerical value of the sub-critical value used to explain the present disclosure, the elements for determining the identity of the characteristic information, and the like may be differently applied in order to obtain a highly reliable intraoral model by a user's selection and/or automatically.

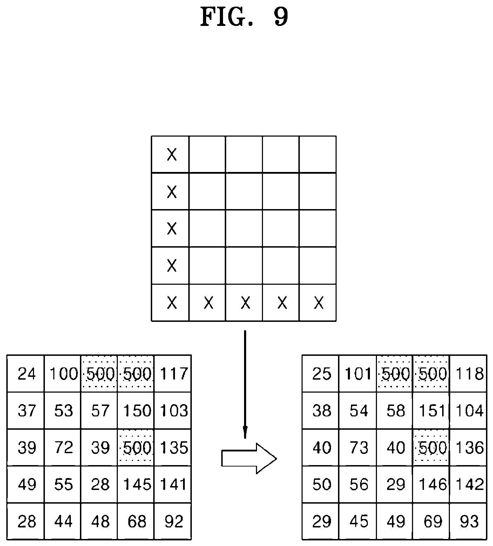

Referring to FIG. 9, the data density of some unit cells may have reached a critical value. Shaded unit cells among the unit cells of the left 5×5 matrix correspond to unit cells, the data density of which reaches the critical value. Because a sufficient amount of data for obtaining a highly reliable intraoral model is accumulated in the unit cell, the obtaining of additional data may cause waste of system resources and distortion of data. Accordingly, the characteristic information of the unit cell, the characteristic information of which is less than the critical value, among the unit cells corresponding to new data input from the scanner 10 is updated, and data is not stored in the unit cell, the characteristic information of which is equal to or greater than the critical value. That is, the data density of the unit cell corresponding to the data density of 500 among the parts corresponding to the unit cells to which the new data is input does not increase even when the new data is input, and the characteristic information of other unit cells is updated to increase the data density. That is, the unit cells, the data density of which has reached the critical value may be locked so that no more data is added. As described above, because the existing data is updated with the data obtained from the scanner 10, there is an advantage in that an intraoral model with high reliability as a whole may be obtained and precise treatment may be provided to a patient.

At this time, in the data locking system according to the present disclosure, the expression "the data density does not reach the critical value" does not mean that data is incorrectly input to the corresponding unit cell. That is, the process of locking the unit cells, the data density of which has reached the critical value, updating the characteristic information for the remaining unit cells, and increasing the data density is performed for obtaining an intraoral model with high reliability as a whole, and the unit cell, the data density of which does not reach the critical value, is not determined as abnormal data. In addition, the characteristic information of the unit cell, the data density of which does not reach the critical value, is not 'replaced' by the newly input data, and a sufficient amount of data may be additionally accumulated in the corresponding unit cell so that the data density reaches the critical value.

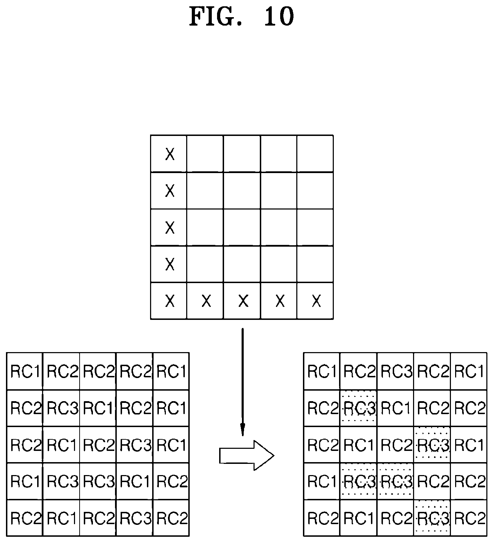

On the other hand, referring to FIG. 10, the characteristic information identified by the corresponding point determiner 24 may be information about reliability color rather than data density. Three reliability colors RD1, RD2, and RD3 are assigned according to the magnitude of the data density. For example, when the magnitude of the data density is in a first range (greater than or equal to 1 and less than the sub-critical value), the first reliability color RD1 may be assigned to the corresponding unit cell. In addition, when the magnitude of the data density is in a second range (greater than or equal to the sub-critical value and less than the (main) critical value), the second reliability color RD2 may be assigned to the corresponding unit cell. In addition, when the magnitude of the data density is equal to the critical value, the third reliability color RD3 may be assigned to the corresponding unit cell. At this time, the third reliability color RD3 is a critical color assigned to a unit cell in which a sufficient amount of data density is accumulated and additional data input is unnecessary. Regarding the unit cell to which the critical color is assigned, even when new data is input from the scanner 10, new data is not stored in the corresponding unit cell. The critical color may be green, and new data may not be stored in the unit cell, the reliability color of which is green. As illustrated in FIG. 10, because the shaded unit cell has already been assigned the third reliability color RD3, which is the critical color, additional data is not stored even when new data is input, and thus, characteristic information is not updated. Accordingly, additional data is not accumulated in the unit cell, the reliability color of which is green, and newly input additional data is accumulated in the unit cells, the reliability color of which is not green (there is no reliability color, or the reliability color is the first reliability color that is red or the second reliability color that is yellow). Therefore, there is an advantage of being able to obtain an intraoral model with high reliability as a whole. The reliability color has been described as having three colors (red, yellow, and green) in stages, but the present disclosure is not necessarily limited thereto. Any configuration in which n reliability colors may be assigned according to the magnitude of the data density is possible, and the data density may also be changed according to the user's selection.

On the other hand, as described above, the unit cell having the first reliability color RD1 or the second reliability color RD2 is not determined as abnormal data. In addition, the first reliability color RD1, the second reliability color RD2, and the third reliability color RD3 do not represent different abnormal states. In addition, the characteristic information of the unit cell, the data density of which does not reach the critical value, is not 'replaced' by the newly input data, and a sufficient amount of data may be additionally accumulated in the corresponding unit cell so that the data density reaches the critical value. Accordingly, the reliability color of the corresponding unit cell may also be changed to the third reliability color RD3.

On the other hand, when the critical color is assigned as the reliability color to the unit cells constituting the real-time three-dimensional surface, the characteristic assigner 23 may additionally assign update restriction information to the corresponding unit cell. For example, for the unit cell to which the critical color is not assigned among the unit cells constituting the real-time three-dimensional surface, an initial value is set for the update restriction information. In this case, the initial value may be 0. In contrast, in the unit cell to which the critical color (green) is assigned among the unit cells constituting the real-time three-dimensional surface, a value different from the initial value is set for the update restriction information, and the value at this time may be 1. Accordingly, the corresponding point determiner 24 may not store the data obtained from the scanner 10 in the corresponding unit cell when the update restriction information is assigned to the unit cell (set to a value other than the initial value). As described above, when determining whether to additionally accumulate data through update restriction information, there is an advantage of simplifying the determination process. However, in addition to the numerical update restriction information classification method as described above, various methods may be applied to indicate that additional data accumulation is no longer required due to sufficient data accumulation in the corresponding unit cell.

Operations of the controller 20, such as the operations of generating and aligning the real-time three-dimensional surface and displaying the characteristic information (particularly, reliability color) as described above, may be displayed on the display 30 on which the user interface is displayed. The practitioner may easily confirm whether the scanning is smoothly performed through the display 30. Any configuration capable of displaying the user interface may be applied to the display 30, and the display 30 may be a screen device including a liquid crystal display (LCD) panel and a light-emitting diode (LED) panel.

The data obtained by the scanning of the scanner 10, the characteristic information of the unit cells of the real-time three-dimensional surface, and the like may be stored in a storage 40. When the scanning-related processes (real-time three-dimensional surface generation, alignment, characteristic information assignment, corresponding point determination, and characteristic information update) are completed, data accumulated in the storage 40 may be merged with the real-time three-dimensional surface to generate a final three-dimensional intraoral model.

As described above, the data locking system according to the present disclosure performs data locking by determining whether the data density reaches the critical value (or whether the reliability color has the critical color) on a unit cell basis, thereby providing an advantage of being able to obtain a precise intraoral model with high reliability for the entire object. That is, the present disclosure has an advantage in that data may be accumulated with high reliability for each unit cell of the intraoral model representing the object, and the user may precisely scan the entire object.

The process of configuring the data locking system described above and the technical features of the data locking system according to the present disclosure are equally applied to a data locking method according to the present disclosure.

Hereinafter, a data locking method according to the present disclosure will be described in detail. However, the same description as provided above in the data locking system will be briefly mentioned or omitted.

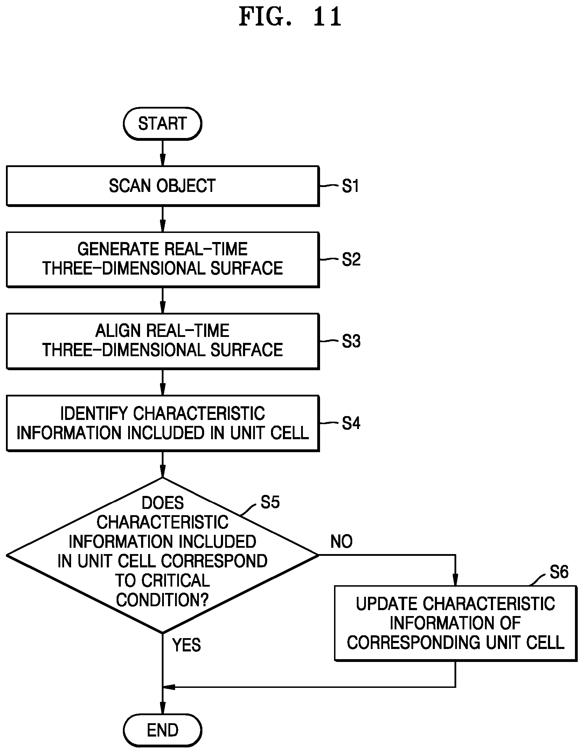

FIG. 11 is a flowchart of a data locking method according to the present disclosure.

Referring to FIG. 11, the data locking method according to the present disclosure may include a scanning operation S1 of receiving light reflected from an object to be scanned, a real-time three-dimensional surface generating operation S2 of converting image data obtained by the light received in the scanning operation S1 into a form of a real-time three-dimensional surface including at least one unit cell, and an aligning operation S3 of aligning overlapped unit cells of the real-time three-dimensional surface.

The scanning operation S1 is an operation by which a scanner obtains two-dimensional image data by receiving the light reflected from the object. In order to form two-dimensional image data into the real-time three-dimensional surface, structured light may be emitted to the object through a light projector included in the scanner. As described above, the light reflected from the object is received through a camera lens and is formed as two-dimensional image data by an imaging sensor that is electrically and communicatively connected to the camera.

The real-time three-dimensional surface generating operation S2 is an operation of converting the generated two-dimensional image data into the real-time three-dimensional surface having surface information. The real-time three-dimensional surface may include at least one unit cell in a form of a voxel having a volume, and characteristic information of the location corresponding to the real-time three-dimensional surface may be assigned to the unit cell. In this case, as described above, the characteristic information may be at least one of curvature, object color, data density, reliability color, and update restriction information.

The aligning operation S3 is an operation of aligning overlapped unit cells of the real-time three-dimensional surface to match the corresponding locations. By aligning the unit cells at the corresponding locations, the three-dimensional intraoral model may be generated without distortion. As the method of aligning the unit cells of the real-time three-dimensional surface at the corresponding locations, an ICP method may be used.

On the other hand, the data locking method according to the present disclosure may further include a corresponding point determining operation S5 of determining whether to selectively update the characteristic information included in the unit cell according to the characteristic information of the unit cell. In the corresponding point determining operation, the characteristic information included in the unit cell is identified to determine whether the characteristic information included in the unit cell corresponds to a critical condition. In this case, the critical condition may be a critical value of specific characteristic information. For example, the critical condition may be a value representing a specific magnitude of data density, critical color among reliability colors, or update restriction information.

According to the corresponding point determining operation S5, the unit cell, the characteristic information of which does not correspond to the critical condition, may be determined as a target cell to be updated by new data input from a scanner. When the unit cell to be updated is determined, a real-time three-dimensional surface updating step S6 of updating the characteristic information included in the corresponding unit cell may be additionally performed. When the characteristic information included in the unit cell is the data density, the data density included in the unit cell to be updated may be added, or when the reliability color corresponding to the data density is assigned, the reliability color may be changed to correspond to a change in data density. The process of updating the characteristic information of the unit cell is the same as that in FIGS. 8 to 10 and described above.

On the other hand, when the characteristic information included in the unit cell corresponds to the critical condition, the data obtained from the scanning operation S1 may not be stored in the corresponding unit cell. When the characteristic information corresponds to the critical condition, accumulation of additional data in the corresponding unit cell may cause a deterioration in reliability of the intraoral model due to unnecessary use of system resources and data distortion. Accordingly, there is an advantage of improving reliability of the overall three-dimensional intraoral model because additional data is not accumulated in the unit cell having characteristic information corresponding to the critical condition.

The criterion for determining the critical condition may be information about the reliability color assigned to correspond to the data density. When it is determined that the reliability color corresponds to the critical color, the data obtained in the scanning operation S1 may not be stored in the corresponding unit cell. In this case, the critical color may be green.

When highly reliable data is formed through the operations described above, a merging operation of generating a three-dimensional intraoral model by merging the real-time three-dimensional surface may be performed.

On the other hand, in the data locking system and the data locking method according to the present disclosure, all operations are processed based on unit cells. By performing the data locking and the characteristic information update on a unit cell basis, the calculation process is simple and intuitive, compared to an existing configuration in which grouping is performed according to the scan area and data is locked, and thus, system resources may be efficiently used. As a result, there is an advantage of being able to quickly obtain a highly reliable three-dimensional intraoral model and provide accurate prosthetic treatment to the patient.

The above description is merely illustrative of the technical spirit of the present disclosure, and various modifications and changes can be made by those of ordinary skill in the art, without departing from the scope of the present disclosure.

Therefore, embodiments disclosed in the present disclosure are not intended to limit the scope of the present disclosure, but are intended to explain the technical content of the present disclosure. The scope of the present disclosure is not limited by these embodiments. The scope of the present disclosure should be interpreted by the appended claims.

### Industrial Applicability

The present disclosure provides a data locking system and a data locking method, in which data locking is performed on a unit cell basis to prevent unnecessary use of resources and obtain a highly reliable intraoral model.

## Claims

1. A data locking system (1) comprising:
a controller (20) configured to process a plurality of pieces of data obtained from the light received by a scanner (10) so as to be displayed on a user interface (30) in a form of a real-time three-dimensional surface including at least one unit cell, each of said at least one unit cell being a voxel and including characteristic information including at least one of data density, curvature, object color and reliability color being representative of the magnitude of the data density, and to determine whether to update the characteristic information of a corresponding existing unit cell, based on a characteristic information of the newly input data in the corresponding existing unit cell of the real-time three-dimensional surface.

2. The data locking system of claim 1, wherein the controller comprises:
a three-dimensional data generator configured to convert the data obtained from the scanner into the real-time three-dimensional surface including at least one unit cell;
an aligner configured to align a location of the real-time three-dimensional surface;
a characteristic assigner configured to assign characteristic information to the unit cell;
a corresponding point determiner configured to determine whether the characteristic information of the newly input data is less than a critical value for the unit cell of the aligned real-time three-dimensional surface; and
a merger configured to generate a three-dimensional intraoral model by merging the aligned real-time three-dimensional surface.

3. The data locking system of claim 2, wherein the characteristic assigner is further configured to assign information about the reliability color to the unit cell, and the information about the reliability color is assigned to correspond to a magnitude of the data density.

4. The data locking system of claim 3, wherein the information about the reliability color includes at least two colors corresponding to the magnitude of the data density.

5. The data locking system of claim 2, wherein the corresponding point determiner is further configured to identify the characteristic information of the corresponding existing unit cell corresponding to an overlapped and aligned portion of the real-time three-dimensional surface.

6. The data locking system of claim 5, wherein the corresponding point determiner is further configured to selectively update the characteristic information included in the corresponding existing unit cell through the characteristic assigner according to the characteristic information of the newly input data in the corresponding existing unit cell.

7. The data locking system of claim 5 or 6, wherein the characteristic information identified by the corresponding point determiner is information about the reliability color.

8. The data locking system of claim 7, wherein, when the information about the reliability color assigned to the unit cell corresponds to a critical color, the characteristic information of the corresponding existing unit cell is not updated with the characteristic information of the newly input data.

9. The data locking system of claim 8, wherein the critical color is green.

10. The data locking system of claim 6, wherein, when the information about the reliability color assigned to the unit cell corresponds to a critical color, the characteristic assigner is further configured to assign update restriction information to the unit cell.

11. The data locking system of claim 10, wherein, when the update restriction information is assigned to the unit cell, the corresponding point determiner is further configured not to update the characteristic information of the corresponding existing unit cell using the characteristic information of the newly input data .

12. The data locking system of claim 2, further comprising a display displaying at least a portion of the characteristic information on the user interface.

13. A data locking method comprising:
a scanning operation of receiving light reflected from an object to be scanned;
a real-time three-dimensional surface generating operation of converting image data obtained by the light received in the scanning operation into a form of a real-time three-dimensional surface including at least one unit cell, each of said at least one unit cell being a voxel and including characteristic information including at least one of data density, curvature, object color and reliability color being representative of the magnitude of the data density;
an aligning operation of aligning an overlapped unit cell of the real-time three-dimensional surface; and
a corresponding point determining operation of determining whether to selectively update the characteristic information of a corresponding existing unit cell, based on characteristic information of the newly input data in the corresponding existing unit cell of the real-time three-dimensional surface.

## Patentansprüche

1. Datensperrsystem (1), umfassend:
eine Steuerung (20), die dazu konfiguriert ist, eine Vielzahl von Datenelementen zu verarbeiten, die von dem Licht erhalten wird, das durch einen Scanner (10) empfangen wird, um auf einer Benutzerschnittstelle (30) in einer Form einer dreidimensionalen Echtzeitoberfläche angezeigt zu werden, die zumindest eine Einheitszelle beinhaltet, wobei jede von der zumindest einen Einheitszelle ein Voxel ist und Merkmalsinformationen beinhaltet, die zumindest eines von Datendichte, Krümmung, Objektfarbe und Zuverlässigkeitsfarbe, die repräsentativ für die Größe der Datendichte ist, beinhalten, und um basierend auf einer Merkmalsinformation der neu eingegebenen Daten in der entsprechenden vorhandenen Einheitszelle der dreidimensionalen Echtzeitoberfläche zu bestimmen, ob die Merkmalsinformationen einer entsprechenden vorhandenen Einheitszelle zu aktualisieren sind.

2. Datensperrsystem nach Anspruch 1, wobei die Steuerung Folgendes umfasst:
einen dreidimensionalen Datengenerator, der dazu konfiguriert ist, die Daten, die von dem Scanner erhalten werden, in die dreidimensionale Echtzeitoberfläche umzuwandeln, die zumindest eine Einheitszelle beinhaltet;
einen Ausrichter, der dazu konfiguriert ist, eine Stelle der dreidimensionalen Echtzeitoberfläche auszurichten;
einen Merkmalszuweiser, der dazu konfiguriert ist, der Einheitszelle Merkmalsinformationen zuzuweisen;
einen entsprechenden Punktbestimmer, der dazu konfiguriert ist, zu bestimmen, ob die Merkmalsinformationen der neu eingegebenen Daten weniger als ein kritischer Wert für die Einheitszelle der ausgerichteten dreidimensionalen Echtzeitoberfläche sind; und
einen Verschmelzer, der dazu konfiguriert ist, ein dreidimensionales intraorales Modell durch Verschmelzen der ausgerichteten dreidimensionalen Echtzeitoberfläche zu erzeugen.

3. Datensperrsystem nach Anspruch 2, wobei der Merkmalszuweiser ferner dazu konfiguriert ist, der Einheitszelle Informationen über die Zuverlässigkeitsfarbe zuzuweisen und die Informationen über die Zuverlässigkeitsfarbe zugewiesen werden, um einer Größe der Datendichte zu entsprechen.

4. Datensperrsystem nach Anspruch 3, wobei die Informationen über die Zuverlässigkeitsfarbe zumindest zwei Farben beinhalten, die der Größe der Datendichte entsprechen.

5. Datensperrsystem nach Anspruch 2, wobei der entsprechende Punktbestimmer ferner dazu konfiguriert ist, die Merkmalsinformationen der entsprechenden vorhandenen Einheitszelle entsprechend einem überlappten und ausgerichteten Abschnitt der dreidimensionalen Echtzeitoberfläche zu identifizieren.

6. Datensperrsystem nach Anspruch 5, wobei der entsprechende Punktbestimmer ferner dazu konfiguriert ist, die Merkmalsinformationen, die in der entsprechenden vorhandenen Einheitszelle enthalten sind, durch den Merkmalszuweiser gemäß den Merkmalsinformationen der neu eingegebenen Daten in der entsprechenden vorhandenen Einheitszelle selektiv zu aktualisieren.

7. Datensperrsystem nach Anspruch 5 oder 6, wobei die Merkmalsinformationen, die durch den entsprechenden Punktbestimmer identifiziert werden, Informationen über die Zuverlässigkeitsfarbe sind.

8. Datensperrsystem nach Anspruch 7, wobei, wenn die Informationen über die Zuverlässigkeitsfarbe, die der Einheitszelle zugewiesen sind, einer kritischen Farbe entsprechen, die Merkmalsinformationen der entsprechenden vorhandenen Einheitszelle nicht mit den Merkmalsinformationen der neu eingegebenen Daten aktualisiert werden.

9. Datensperrsystem nach Anspruch 8, wobei die kritische Farbe grün ist.

10. Datensperrsystem nach Anspruch 6, wobei, wenn die Informationen über die Zuverlässigkeitsfarbe, die der Einheitszelle zugewiesen sind, einer kritischen Farbe entsprechen, der Merkmalszuweiser ferner dazu konfiguriert ist, der Einheitszelle Aktualisierungsbeschränkungsinformationen zuzuweisen.

11. Datensperrsystem nach Anspruch 10, wobei, wenn die Aktualisierungsbeschränkungsinformationen der Einheitszelle zugewiesen sind, der entsprechende Punktbestimmer ferner dazu konfiguriert ist, die Merkmalsinformationen der entsprechenden vorhandenen Einheitszelle unter Verwendung der Merkmalsinformationen der neu eingegebenen Daten nicht zu aktualisieren.

12. Datensperrsystem nach Anspruch 2, ferner umfassend eine Anzeige, die zumindest einen Abschnitt der Merkmalsinformationen auf der Benutzerschnittstelle anzeigt.

13. Datensperrverfahren, umfassend:
einen Scanvorgang des Empfangens von Licht, das von einem zu scannenden Objekt reflektiert wird;
einen dreidimensionalen Echtzeitoberflächenerzeugungsvorgang des Umwandelns von Bilddaten, die durch das Licht erhalten werden, das in dem Scanvorgang empfangen wird, in eine Form einer dreidimensionalen Echtzeitoberfläche, die zumindest eine Einheitszelle beinhaltet, wobei jede von der zumindest einen Einheitszelle ein Voxel ist und Merkmalsinformationen beinhaltet, die zumindest eines von Datendichte, Krümmung, Objektfarbe und Zuverlässigkeitsfarbe, die repräsentativ für die Größe der Datendichte ist, beinhalten;
einen Ausrichtungsvorgang des Ausrichtens einer überlappten Einheitszelle der dreidimensionalen Echtzeitoberfläche, und
einen entsprechenden Punktbestimmungsvorgang des Bestimmens, ob die Merkmalsinformationen einer entsprechenden vorhandenen Einheitszelle selektiv zu aktualisieren sind, basierend auf Merkmalsinformationen der neu eingegebenen Daten in der entsprechenden vorhandenen Einheitszelle der dreidimensionalen Echtzeitoberfläche.

## Revendications

1. Système de verrouillage de données (1) comprenant :
un dispositif de commande (20) configuré pour traiter une pluralité d'éléments de données obtenus à partir de la lumière reçue par un dispositif de balayage (10) de façon à être affichés sur une interface utilisateur (30) sous la forme d'une surface tridimensionnelle en temps réel comprenant au moins une cellule unitaire, chacune de ladite au moins une cellule unitaire étant un voxel et comprenant des informations de caractéristiques comprenant au moins l'une de la densité de données, de la courbure, de la couleur d'objet et de la couleur de fiabilité représentant l'amplitude de la densité de données, et pour déterminer si, oui ou non, les informations de caractéristiques d'une cellule unitaire existante correspondante doivent être mises à jour, sur la base des informations de caractéristiques des données nouvellement entrées dans la cellule unitaire existante correspondante de la surface tridimensionnelle en temps réel.

2. Système de verrouillage de données de la revendication 1, ledit dispositif de commande comprenant :
un générateur de données tridimensionnelles configuré pour convertir les données obtenues à partir du dispositif de balayage en la surface tridimensionnelle en temps réel comprenant au moins une cellule unitaire ;
un dispositif d'alignement configuré pour aligner un emplacement de la surface tridimensionnelle en temps réel ;
un dispositif d'attribution de caractéristiques configuré pour attribuer des informations de caractéristiques à la cellule unitaire ;
un dispositif de détermination de point correspondant configuré pour déterminer si, oui ou non, les informations de caractéristiques des données nouvellement entrées sont inférieures à une valeur critique pour la cellule unitaire de la surface tridimensionnelle en temps réel alignée ; et
un dispositif de fusion configuré pour générer un modèle intraoral tridimensionnel en fusionnant la surface tridimensionnelle en temps réel alignée.

3. Système de verrouillage de données de la revendication 2, ledit dispositif d'attribution de caractéristiques étant en outre configuré pour attribuer des informations concernant la couleur de fiabilité à la cellule unitaire, et lesdites informations concernant la couleur de fiabilité étant attribuées pour correspondre à une amplitude de la densité de données.

4. Système de verrouillage de données de la revendication 3, lesdites informations concernant la couleur de fiabilité comprenant au moins deux couleurs correspondant à l'amplitude de la densité de données.

5. Système de verrouillage de données de la revendication 2, ledit dispositif de détermination de point correspondant étant en outre configuré pour identifier les informations de caractéristiques de la cellule unitaire existante correspondante correspondant à une partie superposée et alignée de la surface tridimensionnelle en temps réel.

6. Système de verrouillage de données de la revendication 5, ledit dispositif de détermination de point correspondant étant en outre configuré pour mettre à jour sélectivement les informations de caractéristiques comprises dans la cellule unitaire existante correspondante par l'intermédiaire du dispositif d'attribution de caractéristiques selon les informations de caractéristiques des données nouvellement entrées dans la cellule unitaire existante correspondante.

7. Système de verrouillage de données de la revendication 5 ou 6, lesdites informations de caractéristiques identifiées par le dispositif de détermination de point correspondant étant des informations concernant la couleur de fiabilité.

8. Système de verrouillage de données de la revendication 7, lorsque les informations concernant la couleur de fiabilité attribuée à la cellule unitaire correspondent à une couleur critique, lesdites informations de caractéristiques de la cellule unitaire existante correspondante n'étant pas mises à jour avec les informations de caractéristiques des données nouvellement entrées.

9. Système de verrouillage de données de la revendication 8, ladite couleur critique étant le vert.

10. Système de verrouillage de données de la revendication 6, lorsque les informations concernant la couleur de fiabilité attribuée à la cellule unitaire correspondent à une couleur critique, ledit dispositif d'attribution de caractéristiques étant en outre configuré pour attribuer des informations de restriction de mise à jour à la cellule unitaire.

11. Système de verrouillage de données de la revendication 10, lorsque les informations de restriction de mise à jour sont attribuées à la cellule unitaire, ledit dispositif de détermination de point correspondant étant en outre configuré pour ne pas mettre à jour les informations de caractéristiques de la cellule unitaire existante correspondante à l'aide des informations de caractéristiques des données nouvellement entrées.

12. Système de verrouillage de données de la revendication 2, comprenant en outre un dispositif d'affichage affichant au moins une partie des informations de caractéristiques sur l'interface utilisateur.

13. Procédé de verrouillage de données comprenant :
une opération de balayage comprenant la réception de la lumière réfléchie par un objet à balayer ;
une opération de génération de surface tridimensionnelle en temps réel comprenant la conversion de données d'image obtenues par la lumière reçue dans l'opération de balayage en une forme de surface tridimensionnelle en temps réel comprenant au moins une cellule unitaire, chacune de ladite au moins une cellule unitaire étant un voxel et comprenant des informations de caractéristiques comprenant au moins l'une de la densité de données, de la courbure, de la couleur d'objet et de la couleur de fiabilité représentant l'amplitude de la densité de données ;
une opération d'alignement comprenant l'alignement d'une cellule unitaire chevauchée de la surface tridimensionnelle en temps réel ; et
une opération de détermination de point correspondant comprenant la détermination pour savoir si, oui ou non, les informations de caractéristiques d'une cellule unitaire existante correspondante doivent être mises à jour, sur la base des informations de caractéristiques des données nouvellement entrées dans la cellule unitaire existante correspondante de la surface tridimensionnelle en temps réel.
